Europäisches Patentamt

European Patent Office

Office européen des brevets

(11) Veröffentlichungsnummer: **0 305 649**
**A2**

## (12) EUROPÄISCHE PATENTANMELDUNG

(21) Anmeldenummer: 88108241.6

(22) Anmeldetag: 24.05.88

(51) Int. Cl.⁴: **B29C 67/18 , B29C 67/14 ,
B29C 43/18**

(30) Priorität: 21.07.87 DE 3724080

(43) Veröffentlichungstag der Anmeldung:
08.03.89 Patentblatt 89/10

(84) Benannte Vertragsstaaten:
DE FR GB IT

(71) Anmelder: **Dr.Ing.h.c. F. Porsche
Aktiengesellschaft
Porschestrasse 42
D-7000 Stuttgart 40(DE)**

(72) Erfinder: **Ehinger, Peter, Dipl.-Ing.
Elmestrasse 58
D-7257 Hirschlanden(DE)**

(54) Verfahren zum Herstellen eines wärmebeständigen Kunststoffteils.

(57) Die Erfindung betrifft ein Verfahren zum Herstellen eines wärmebeständigen Kunststoffteils, das als Abschirmteil für heiße Bauteile einer Kraftmaschine benutzt werden kann. Dabei wird auf eine Kunststoffschicht eine Verbundfolie aus einem mit einer Metallfolie kaschierten Fasergewebe im Fließpressverfahren aufgepresst.

FIG.1

EP 0 305 649 A2

## Verfahren zum Herstellen eines wärmebeständigen Kunststoffteils

Die Erfindung betrifft ein Verfahren zum Herstellen eines wärmebeständigen Kunststoffteils.

Es ist üblich, heiße und schallabstrahlende Bauteile von Brennkraftmaschinen, z.B. die Auspuffkrümmer, durch Abschirmteile abzudecken, die aus Metall gefertigt sind. Solche Metallbleche können nun aber ihrerseits zu Schwingungen angeregt werden und selbst eine Schallquelle darstellen. Das läßt sich verhindern, indem man Abschirmteile aus Kunststoff herstellt, was jedoch insofern problematisch ist, daß es keine Kunststoffe gibt, die auf Dauer sehr hohen Temperaturen standhalten.

Es ist die Aufgabe der Erfindung, ein Verfahren zu entwickeln, mit dem ein solches Kunststoffteil mit geringem Konstenaufwand wärmebeständig gemacht werden kann.

Zur Lösung dieser Aufgabe ist auf eine Kunststoffschicht eine Verbundfolie aus einem mit einer Metallfolie kaschierten Fasergewebe aufgepresst. Eine ähnliche Verbundfolie und ein Verfahren zu ihrer Herstellung ist aus DE-OS 29 16 299 bekannt. Dabei wird über ein Fasergewebe aus Siliziumkarbid oder Kohlenstoff eine Metallfolie und darüber eine Deckfolie gelegt. Die Metallfolie besteht aus einer niedrigschmelzenden Aluminiumlegierung. Die Deckfolie aus Titan oder Aluminium hat bessere mechanische und thermische Eigenschaften. Unter Druckeinwirkung werden die Lagen zu einer Verbundfolie hartgelötet, wobei die niedrigschmelzende Aluminiumlegierung in das Fasergewebe eindiffundiert.

Gemäß einer bevorzugten Ausführungsform der Erfindung wird als Verbundfolie ein mit einer Aluminiumfolie kaschiertes Silikatgewebe verwendet. Die Aluminiumfolie kann mit dem Fasergewebe verklebt oder kalandriert sein, d.h. durch Heißwalzen verbunden sein. Ein Kunststoffteil, das mit einer solchen Verbundfolie durch Aufpressen beschichtet ist, hat eine sehr hohe Wärmebeständigkeit und weist auch eine hohe Widerstandsfähigkeit gegen Schlag, Bruch und Erosion auf. Da es zugleich schalldämmend wirkt, ist es als Abschirmteil für heiße Bauteile einer Brennkraftmaschine bestens geeignet.

Das Aufpressen der Verbundfolie geschieht bevorzugt in der Weise, daß die Verbundfolie in die Matritze einer Presse eingelegt wird, mit Kunststoffzuschnitten oder Kunststoffpulver bedeckt und durch Einfahren eines Stempels in die Matritze in einem Arbeitsgang zum fertigen, ohne Nacharbeit verwendbaren Kunststoffteil verpresst wird.

Das erfindungsgemäße Herstellverfahren soll nun anhand der schematischen Zeichnung noch näher erläutert werden.

Es zeigt

Fig. 1 geöffnete Pressform,

Fig. 2 geschlossene Pressform,

Fig. 3 vergrößerte Darstellung der Schichten des Kunststoffteils.

Eine Pressform besteht aus einem Stempel 1 und einer Matritze 2. Um eine solche Pressform zum Fließpressen verwenden zu können, wird sie zunächst aufgeheizt. Sodann wird die Verbundfolie 3 in die Matritze 2 eingelegt und mit Kunststoffzuschnitten 4 bedeckt, die zuvor auf ca. 350 °C erwärmt wurden. Die Kunststoffzuschnitte bestehen aus Polyamid 6 oder Polyester-Thermoplast, das mit Endlosglasfasern verstärkt ist, um die Festigkeit des Kunststoffteils zu erhöhen. Beim Fließpressen unter hohem Druck füllt das Kunststoffrohmaterial, für das auch Granulat oder Pulver verwendet werden kann, den ganzen Hohlraum zwischen der Matritze 2 und dem Stempel 1 aus. Die Verbundfolie 4 erstreckt sich über den Kunststoff nur so weit, wie er bei Gebrauch vor der einstrahlenden Wärme geschützt werden soll.

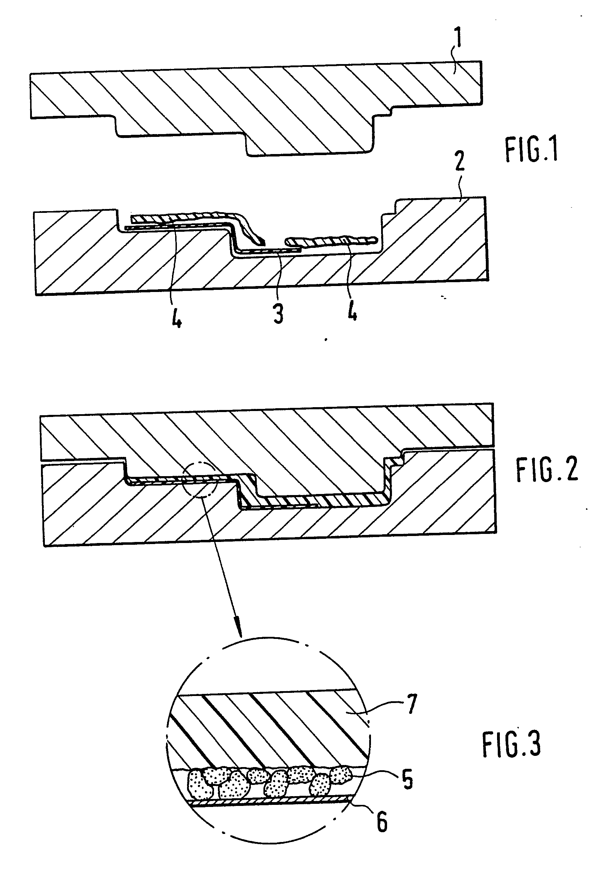

Soll das Kunststoffteil beidseitig gegen Wärme geschützt werden, so wird über die Kunststoffzuschnitte 4 eine weitere Verbundfolie 3 gelegt. Die Kunststoffzuschnitte 4 und die beiden Verbundfolien 3 werden in einem Arbeitsgang zum fertigen Kunststoffteil verpresst. Die Verbundfolie 3 besteht aus jeweils einem Silikatgewebe 5, auf das eine Aluminiumfolie 6 aufgeklebt ist. In Fig. 3 sind die Lagen aus Kunststoffschicht 7, Silikatgewebe 5 und Aluminiumfolie 6 vergrößert dargestellt.

## Ansprüche

1. Verfahren zum Herstellen eines wärmebeständigen Kunststoffteiles, dadurch gekennzeichnet, daß auf eine Kunststoffschicht (7) eine Verbundfolie (3) aus einem mit einer Metallfolie (6) kaschierten Fasergewebe (5) aufgepresst wird.

2. Verfahren nach Anspruch 1, dadurch gekennzeichnet, daß die Verbundfolie (3) aus einem mit einer Aluminiumfolie (6) kaschierten Silikatgewebe (5) hergestellt wird.

3. Verfahren nach Anspruch 1, dadurch gekennzeichnet, daß die Verbundfolie (3) in eine Matritze (2) eingelegt, mit Kunststoffrohmaterial (4) bedeckt und durch Einfahren eines Stempels (1) in die Matritze (2) in einem Arbeitsgang zum fertigen Kunststoffteil verpresst wird.

4. Verfahren nach Anspruch 3, dadurch gekennzeichnet, daß das Kunststoffteil im Fließpreßverfahren hergestellt wird.

1

FIG.1

2

4    3    4

FIG.2

7

FIG.3

5

6